(19) Europäisches Patentamt
European Patent Office
Office européen des brevets

(11) **EP 2 690 575 A2**

(12) **EUROPEAN PATENT APPLICATION**

(43) Date of publication:
**29.01.2014 Bulletin 2014/05**

(51) Int Cl.:
***G06F 21/31*** *(2013.01)*

(21) Application number: **13172514.5**

(22) Date of filing: **18.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.07.2012 JP 2012166490**

(71) Applicant: **Hitachi Ltd.**
**Tokyo (JP)**

(72) Inventors:
• **Asahi, Takeshi**
  **Chiyoda-ku, Tokyo 100-8220 (JP)**
• **Higashi, Masayuki**
  **Yokohama-shi, Kanagawa 244-0817 (JP)**

(74) Representative: **Calderbank, Thomas Roger**
**Mewburn Ellis LLP**
**33 Gutter Lane**
**London**
**EC2V 8AS (GB)**

(54) **User Authentication System, User Authentication Method and Network Apparatus**

(57)     A method for verifying a password at a user terminal in which a password and the URL of a page that is accessed when password authentication is successful are not easily revealed, is provided. In a user authentication system which carries out authentication at a user terminal via a network, a password authentication page where permission of authentication is determined based on a consistency between an input password inputted from the user terminal and an authentication password includes: a private page URL key obtained by transforming a private page URL which the user terminal can connect via the network if it is determined that the authentication is permitted and an authentication password, using an encryption algorithm; and a URL recovery processing code to find the private page URL by transforming the private page URL key and the input password through inverse transformation of the encryption algorithm. If it is determined that the authentication is permitted, the private page URL is acquired using the URL recovery processing code.

*FIG. 1*

**Description**

The present invention relates to a user authentication system, a user authentication method and a network apparatus.

In some cases, the setting of an apparatus connected to a network is carried out using a web browser operating on a user terminal such as a PC (Personal Computer) connected to the same network. In such cases, the apparatus has a web server. The web browser connects with the web server of the apparatus, acquires page information of an operation screen, displays the acquired page information on the screen, and sends the apparatus a preset value inputted by an operation or the like by the user. Thus, the setting of the apparatus is carried out.

At this point, in some cases, a specific operation screen should be a secret page that only the maintenance staff uses so that general users cannot easily use the page. Thus, in order to prevent general users from using the page easily, a password is set and password authentication is carried out for displaying the page. As a method for password authentication, a password inputted to the web browser may be sent to the apparatus side and verified on the apparatus side. This method is advantageous in that the password cannot be revealed easily because information to verify the password does not come out of the apparatus side. However, the method has a drawback that a load is applied on the apparatus side since the verification is carried out on the apparatus side. An unwanted load should not be applied on the apparatus side in order not to impair the original capability of the apparatus.

Thus, as another method for password authentication, a password inputted to the web browser may be verified on the web browser side. This method is advantageous in that the load on the apparatus side is low. However, since information to verify the password is sent to the web browser side, the correct password can be revealed from the information.

Thus, according to JP-A-2001-60185, in order to determine a password match, a password input prompt 3 is displayed in a "modal window" immediately after an HTML (Hyper Text Markup Language) file 1 including a password is read onto a web browser screen 2. Thus, the focus cannot be shifted to the web browser screen 2 while the password input prompt 3 is displayed. Also, after the password is inputted, the web browser screen 2 is shifted to another URL according to the result of the match determination and therefore the password is not revealed. In this manner, the source of the HTML file 1 cannot be displayed and the password is not revealed. Thus, the possibility of the correct password being revealed is reduced by the method in which the password is verified on the web browser side.

However, in the method of JP-A-2001-60185, the HTML file itself including the password is sent and received via the network. Therefore, the content of the HTML file may be revealed by monitoring data that circulates on the network, and there is still a possibility that the password may be revealed from there.

Moreover, the URL (Uniform Resource Locator) of a secret page that is accessed when password authentication is successful may be similarly revealed easily. Therefore, there is a possibility that the URL of the secret page may be designated directly so that the secret page can be displayed, avoiding password authentication.

Thus, in view of the foregoing circumstances, a preferred aim of the invention is to provide a method which prevents easy revelation of a password and the URL of a page that is accessed when password authentication is successful, even in a method in which the password is verified at the user terminal.

For example, the configurations described the accompanying claims are employed.

The present application includes plural measures in the light of the foregoing problems. As an example, in a user authentication system which carries out authentication at a user terminal via a network, a password authentication page where permission of authentication is determined based on a consistency between an input password inputted from the user terminal and an authentication password includes: a private page URL key obtained by transforming a private page URL which the user terminal can connect via the network if it is determined that the authentication is permitted and an authentication password, using an encryption algorithm; and a URL recovery processing code to find the private page URL by transforming the private page URL key and the input password through inverse transformation of the encryption algorithm. If it is determined that the authentication is permitted, the private page URL is acquired using the URL recovery processing code.

When authentication is carried out on the user terminal side, the URL that is connected on successful authentication is not revealed from the authentication page. Therefore, private functions cannot be used by others easily.

In the drawings:

> FIG. 1 shows the overall configuration of Example 1.
> FIG. 2 shows the configuration of authentication page information in Example 1.
> FIG. 3 shows an HTML file which is included in an authentication page according to the related art and which includes a password and a private URL.
> FIG. 4 shows an HTML file which is included in an authentication page according to Example 1 and which includes a password key and a private URL key.
> FIG. 5 shows a processing flow of the overall processing in Example 1.

FIG. 6 shows a processing flow of password key generation processing in Example 1.
FIG. 7 shows a processing flow of URL key generation processing in Example 1.
FIG. 8 shows a processing flow of password verification processing in Example 1.
FIG. 9 shows a processing flow of URL recovery processing in Example 1.
FIG. 10 shows the overall configuration of Example 2.

Hereinafter, examples will be described with reference to the drawings.

Example 1

Application to Network Camera

In this example, an example of a network camera 100 which carries out various settings from a web browser 161 on a PC 160 via a network 150 is explained.

Overall Configuration

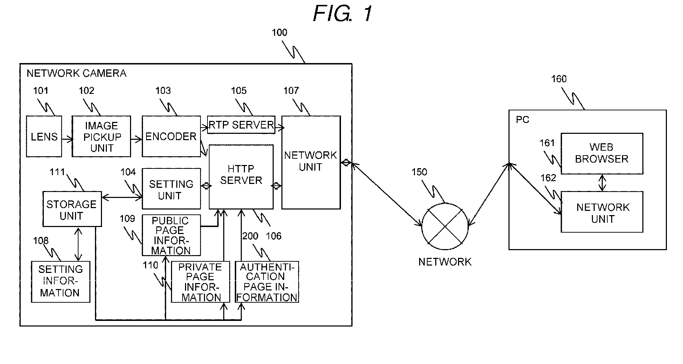

FIG. 1 shows the overall configuration of Example 1.
In FIG. 1, the network camera 100 includes a lens 101, an image pickup unit 102, an encoder 103, a setting unit 104, an RTP server 105, an HTTP server 106, a network unit 107, a storage unit 111, setting information 108, public page information 109, private page information 110, and authentication page information 200. The network camera 100 is connected to the network 150.
The PC 160 includes the web browser 161 and a network unit 162 and is connected to the network 150. The PC 160 may be, for example, a general PC or terminal on which the web browser 161 operates.
The network 150 connects the network camera 100 with the PC 160. The network 150 is, for example, a line connecting an apparatus and another apparatus, that is, serial communication or the like via a LAN (Local Area Network), the Internet, USB (Universal Serial Bus) or RS232C.
The image pickup unit 102 photoelectrically converts luminous fluxes from a subject transmitted through the lens 101 into a digital signal as image data.
The encoder 103 compresses the image data picked up by the image pickup unit 102.
The setting unit 104 records the setting information 108 of the network camera 100 received from the web browser 161 of the PC 160 via the HTTP server 106, into the storage unit 111. Here, the setting information 108 is, for example, information about the settings of the image quality and compression rate of the image or the like transmitted from the network camera 100. The setting unit 104 also reads out the setting information from the storage unit 111 and outputs the setting information to the HTTP server 106.
The RTP server 105 outputs the image data compressed by the encoder 103 via the network unit 107.
The HTTP server 106 transmits the image data compressed by the encoder 103 via the network unit 107. The HTTP server 106 also sends and receives the setting information 108, the public page information 109, the private page information 110 and the authentication page information 200 of the network camera 100 to and from the web browser 161 of the PC 160 via the network unit 107.
The network unit 107 connects with the network 150 and sends and receives the information of the RTP server 105 and the HTTP server 106.
The storage unit 111 stores the setting information 108, the public page information 109, the private page information 110 and the authentication page information 200. An example of the storage unit 111 may be a semiconductor memory.
The setting information 108 is information including a setting parameter which is set for controlling the network camera 100 and used in the image pickup unit 102, the encoder 103, the RTP server 105, the HTTP server 106 and the network unit 107.
The public page information 109 is screen information to be displayed on the web browser 161 without carrying out password authentication. The public page information 109 includes a part of the setting information 108 and information to change the setting of the setting information 108. As an example, the public page information 109 is described in HTML and a script language.
The private page information 110 is screen information to be displayed on the web browser 161 when password authentication is successful. The screen information includes a part of the setting information 108 and information to change the setting of the setting information 108. As an example, the private page information 110 is described in HTML and a script language.
The authentication page information 200 is screen information for carrying out password authentication to determine whether the private page information 110 can be displayed on the web browser 161 or not. As an example, the authentication page information 200 is described in HTML and a script language.

Authentication Page Information

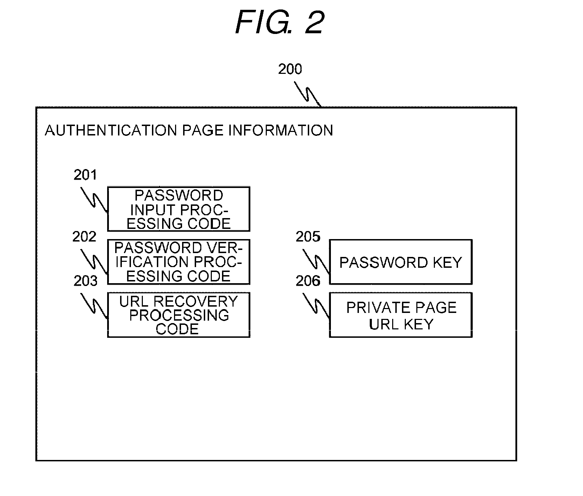

FIG. 2 shows the configuration of the authentication page information 200 of Example 1.

In FIG. 2, the authentication page information 200 includes a password input processing code 201, a password verification processing code 202, a URL recovery processing code 203, a password key 205, and a private page URL key 206.

As an example, the authentication page information 200 is described in HTML, and the password input processing code 201, the password verification processing code 202 and the URL recovery processing code 203 are described in HTML and a script language.

The password input processing code 201 is a code describing processing to input a password on the web browser 161.

The password verification processing code 202 is a code describing processing to carry out password verification processing (S600) on the web browser 161.

The URL recovery processing code 203 is a code describing processing to carry out URL recovery processing (S700) on the web browser 161.

The password key 205 is information to verify whether an inputted password is consistent with an authentication password or not in the password verification processing (S600) carried out on the web browser 161. The password key 205 is decided based on the authentication password.

The private page URL key 206 is information used to carry out the URL recovery processing (S700) on the web browser 161. The private page URL key 206 is decided based on the private page URL.

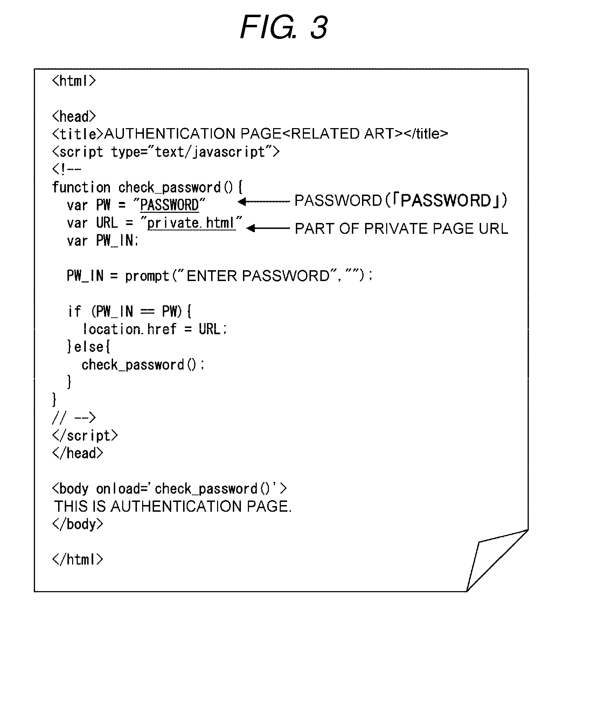

FIG. 3 shows information contained in an HTML file included in an authentication page of the related art. The underlined parts in FIG. 3 show the password and a part of the URL of a private page. That is, since the related-art HTML file includes an authentication password used in password authentication and the private page URL, there is a possibility that the password and the private page URL may be revealed to a third party.

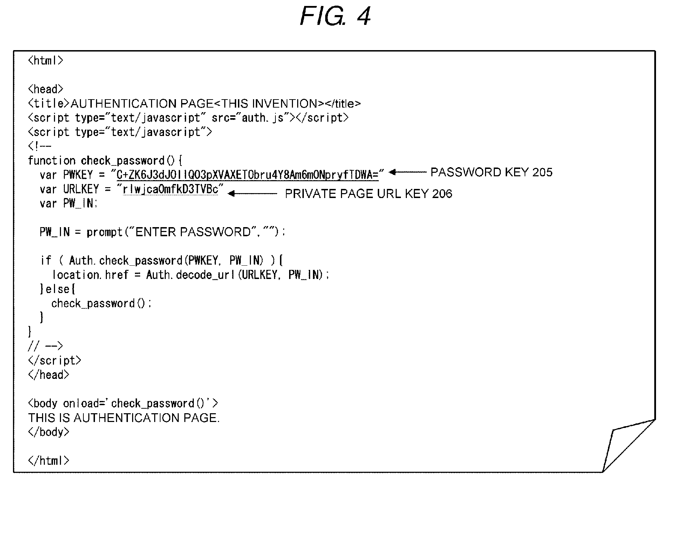

FIG. 4 shows information contained in an HTML file included in the authentication page of Example 1 in the case where the password key 205 and the private page URL key 206 are displayed. As indicated by the underlined parts in FIG. 4, the password and the private page URL are included in the information of the HTML file, in the form of the password key 205 and the private page URL key 206, respectively. That is, since an authentication password used in password authentication and the private page URL are not included in the information of the HTML file, there is no risk that the password and the private page URL may be acquired on the authentication page by an unauthorized person, and the password and the private page URL can be kept secret.

The private page URL key 206 may also be decided in advance based on the private page URL.

Overall Processing Flow

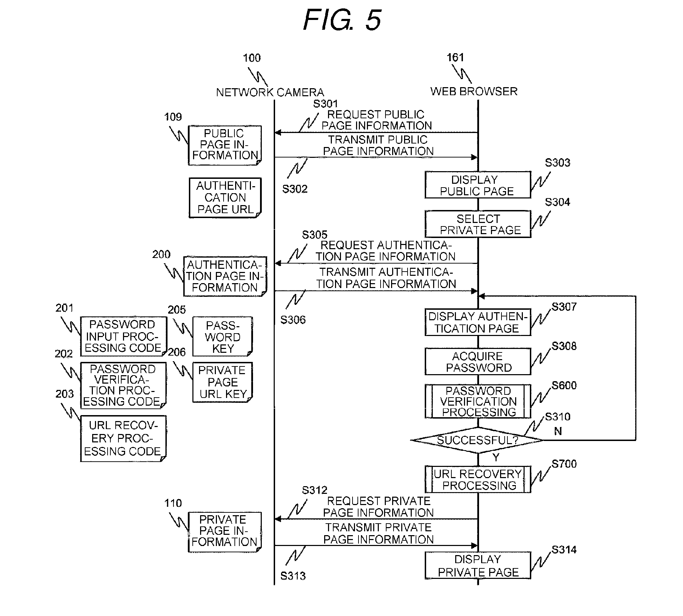

FIG. 5 shows a processing flow of overall processing in Example 1.

In FIG. 5, the web browser 161 requests the public page information 109 from the network camera 100 (S301).

The network camera 100 transmits the public page information 109 to the web browser 161 in response to the request (S302). The public page information 109 includes an authentication page URL.

The web browser 161 displays a public page based on the received public page information 109 (S303).

In the public page, a button or the like to prompt a shift to a private page is displayed (S304). When shifting to the private page, the web browser 161 requests the authentication page information 200 from the network camera 100, designating the authentication page URL (S305).

The network camera 100 transmits the authentication page information 200 to the web browser 161 in response to the request (S306). The authentication page information 200 includes the password input processing code 201, the password verification processing code 202, the URL recovery processing code 203, the password key 205 and the private page URL key 206.

The web browser 161 displays an authentication page based on the received authentication page information 200 (S307). The authentication page has an input section to prompt a password input, and the password inputted in the input section is acquired using the password input processing code 201 (S308).

The web browser 161 carries out the password verification processing (S600), using the inputted password and the password key 205 as inputs, and determines the result of the verification using the password verification processing code 202 (S310). If the verification is unsuccessful, the processing repeats from S307 again. Meanwhile, if the verification is successful, the web browser 161 transforms the inputted password and the private page URL key 206 via inverse transformation of a unidirectional function, using the URL recovery processing code, and carries out the URL recovery processing (S700). Thus, the private page URL is acquired.

Generation processing for the password key 205, generation processing for the private page URL key, the password verification processing (S600) and the URL recovery processing (S700) will be described in detail later with reference to FIGS. 5 to 8.

After the private page URL is acquired through the URL recover processing (S700), a request for the private page information 110 designating the private page URL is made (S312). The network camera 100 transmits the private page information 110 to the web browser 161 in response to the request (S313). The web browser 161 displays a private page based on the received private page information 110 (S314).

Password Key Generation Processing

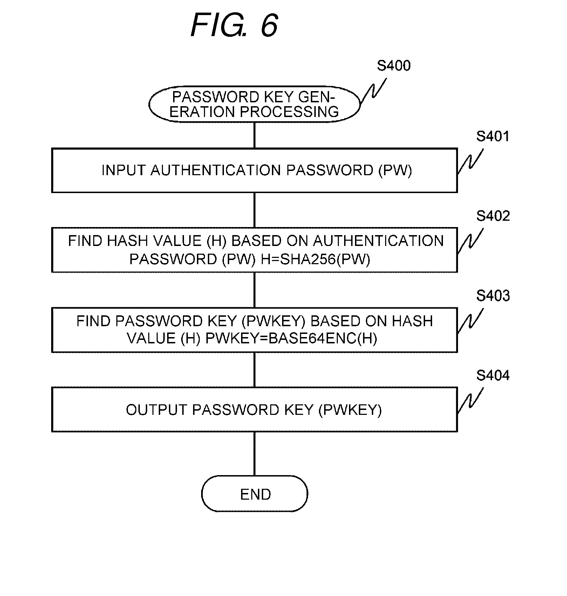

FIG. 6 shows a processing flow of password key generation processing (S400) in order to generate a password key used in the password verification processing (S600) in this example.

In FIG. 6, in the password key generation processing (S400), an authentication password PW is inputted (S401), and a hash value H is found from the authentication password PW, for example, by using the following equation (1), as a unidirectional function, which is a function whereby an output value can be easily calculated based on an input of a predetermined value but it is very difficult to calculate an input value based on an output value (S402). SHA256() is a function to find a hash value using SHA256 (Secure Hash Algorithm 256). Also, a password key PWKEY is found based on the hash value H by using the following equation (2) (S403) and the password key PWKEY is outputted (S404).

$$H = SHA256(PW) \qquad (1)$$

$$PWKEY = PASE64ENC(H) \qquad (2)$$

Here, BASE64ENC() is a function to carry out BASE64 encoding.

The password key 205 found through the password key generation processing (S400) is included in the authentication page information 200.

This password key generation processing (S400) is carried out in the network camera 100 or the manufacturing apparatus of the network camera 100 before the network camera 100 transmits the authentication page information 200 as the private page URL is finalized. For example, the password key generation processing is carried out by the manufacturing apparatus of the network camera 100 when the network camera 100 is manufactured. Alternatively, the password key generation processing is carried out in the network camera 100 after the web browser 161 requests the authentication page information 200 from the network camera 100, designating the authentication page URL (S305).

Private Page URL Key Generation Processing

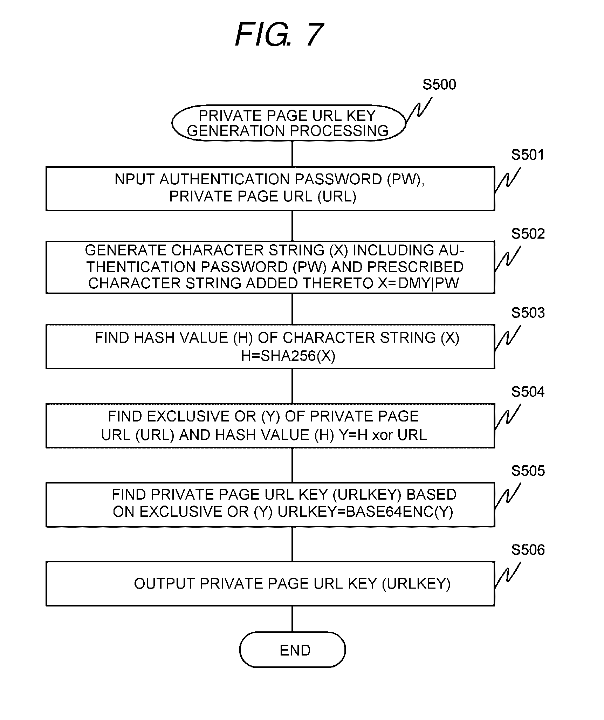

FIG. 7 shows a processing flow of private page URL key generation processing (S500) in this example.

In FIG. 7, in the private page URL key generation processing (S500), an authentication password PW and a private page URL (URL) are inputted (S501), and a character string X including the authentication password PW and a prescribed character string DMY added thereto is generated, for example, using the following equation (3) (S502). If a password key is not used, the addition of the character string DMY may be omitted.

Then, a hash value H of the character string X is found, using the following equation (4), which is a unidirectional function (S503). An exclusive OR Y of the private page URL (URL) and the hash value H is found, using the following equation (5) (S504). A private page URL key (URLKEY) is found based on the exclusive OR Y, using the following equation (6) (S505). The private page URL key (URLKEY) is outputted (S506).

$$X = DMY|PW \qquad (3)$$

$$H = SHA256(X) \qquad (4)$$

$$Y = H \ xor \ URL \qquad\qquad (5)$$

$$URLKEY = BASE64ENC(Y) \qquad (6)$$

Here, | in the equation (3) indicates an operation to connect character strings. SHA256 in the equation (4) is a function to find a hash value using SHA256. Xor in the equation (5) is an operator symbol of exclusive OR. BASE64ENC () in the equation (6) is a function to carry out BASE64 encoding.

In S504, if the data length of the private page URL (URL) is longer than the data length of the hash value H, a hash value H_IN is repeated by the amount of the data length of the private page URL (URL).

The private page URL key 206 thus found through the private page URL key generation processing (S500) is included in the authentication page information 200.

The URL key generation processing (S500) is carried out in the network camera 100 or the manufacturing apparatus of the network camera 100 before the network camera 100 transmits the authentication page information 200 as the private page URL is finalized. For example, the URL key generation processing is carried out by the manufacturing apparatus of the network camera 100 when the network camera 100 is manufactured. Alternatively, the URL key generation processing is carried out in the network camera 100 after the web browser 161 requests the authentication page information 200 from the network camera 100, designating the authentication page URL (S305).

By the way, the hash value is not found directly from the password PW in the equation (4), and the prescribed character string DMY is added in the equation (3) before that for the following reason. That is, if the character string is not added, the hash value H in the equation (4) and the hash value H in the equation (1) are the same value, and therefore if the password key and the URL key are included in the same HTML, the URL may end up being found by the equation of URL = BASE64DEC(URLKEY) xor PWKEY. The above addition is to prevent this.

When a private page URL is inputted to generate a private page URL key, the entire URL may be inputted to generate a private page URL key, or a part of the URL may be inputted to generate a private page URL key.

Password Verification Processing

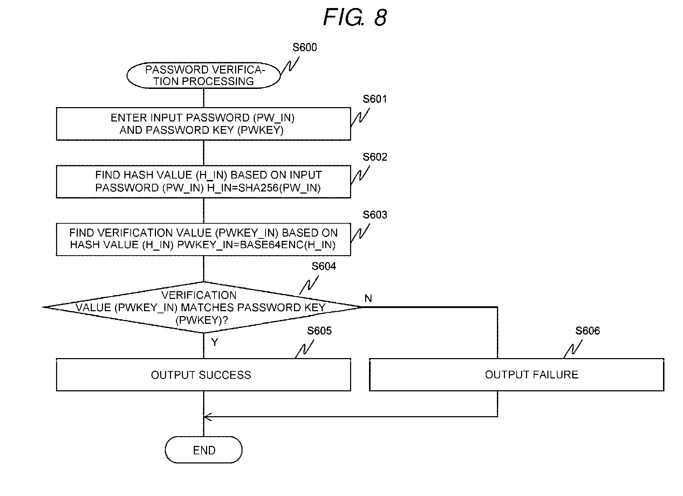

FIG. 8 shows a processing flow of the password verification processing (S600) in this example.

In FIG. 8, in the password verification processing (S600), an input password PW_IN and a password key PWKEY are inputted (S601). A hash value H_IN is found based on the input password PW_IN, using the following equation (7), which is a unidirectional function (S602). A verification value PWKEY_IN is found based on the hash value H_IN, using the following equation (8) (S603). Whether the verification value PWKEY_IN matches the password key PWKEY or not is determined (S604). If the verification value PWKEY_IN matches the password key PWKEY, a success is outputted (S605). If not, a failure is outputted (S606).

$$H\_IN = SHA256(PW\_IN) \qquad (7)$$

$$PWKEY\_IN = BASE64ENC(H\_IN) \qquad (8)$$

Here, SHA256() in the equation (7) is a function to find a hash value using SHA256. BASE64ENC() in the equation (8) is a function to carry out BASE64 encoding.

In the above password verification processing, PWKEY and PWKEY_IN are compared to determine their match, based on the equations (7) and (8). However, using the equation (7) and the following equation (8') to compare H and H_IN has the same effect.

$$H = BASE64DEC(PWKEY) \qquad (8')$$

URL Recovery Processing

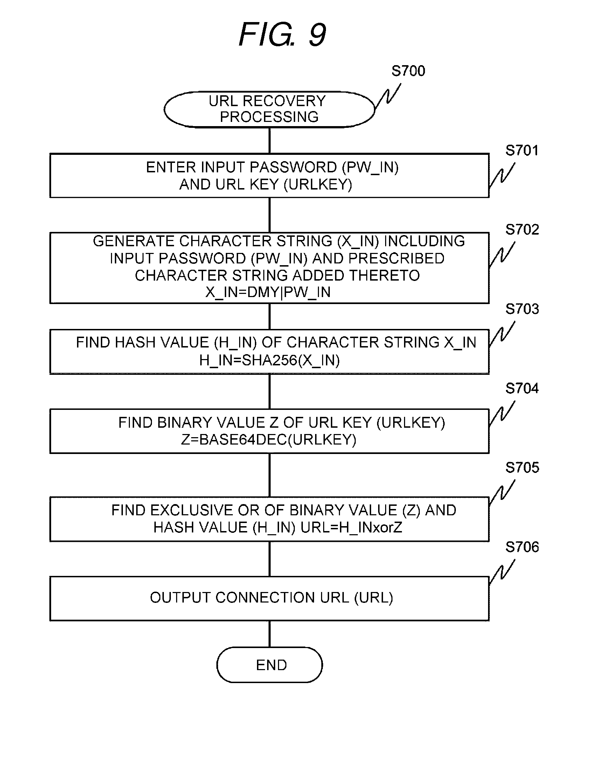

FIG. 9 shows a processing flow of the URL recovery processing (S700) in this example.

In FIG. 9, in the URL recovery processing (S700), an input password PW_IN and a private page URL key (URLKEY) are inputted (S701). A character string X_IN including the password PW_IN and a prescribed character string DMY added thereto is generated, for example, using the equation (9) (S702). Then, a hash value H_IN of the character string X_IN is found, for example, using the equation (10), which is a unidirectional function (S703). A binary value Z of the private page URL key (URLKEY) is found using the equation (11) (S704). An exclusive OR of the binary value Z and the hash value (H_IN) is found using the equation (12). Finally, this exclusive OR is set as a connection URL (URL) (S705) and the connection URL (URL) is outputted (S706).

$$X\_IN = DMY | PW\_IN \qquad (9)$$

$$H\_IN = SHA256(X\_IN) \qquad (10)$$

$$Z = BASE64DEC(URLKEY) \qquad (11)$$

$$URL = H\_IN \ xor \ Z \qquad (12)$$

Here, | in the equation (9) represents an operation to connect character strings. SHA256() in the equation (10) is a function to find a hash value using SHA256. BASE64DEC() in the equation (11) is a function to carry out BASE64 decoding. Xor in the equation (12) is an operator symbol of exclusive OR.

If a password is not used in S702, the addition of the character string can be omitted.

If the data length of the binary value Z is longer than the data length of the hash value H_IN in S705, the hash value H_IN is repeated by the amount of the data length of the binary value Z.

While SHA256 is used as a function to find a hash value in the above description, other hash functions such as SHA1 (Secure Hash Algorithm 1) and MD5 (Message Digest 5) may also be used.

BASE64ENC and BASE64DEC are used to transform the password key and the private page URL key into a text form so that these keys can be included in HTML. However, other text forming measures such as JSON (JavaScript (trademark registered) Object Notation) may also be used.

Character strings are connected in the equations (3) and (9). However, other transformation measures may also be used as long as the transformation results in a different value found by the equation (4).

With the above processing, since the authentication page information 200 transmitted to the web browser 161 from the network camera 100 of Example 1 does not include the password and the private page URL, the password can be prevented from being revealed to a third party and the private page URL can be prevented from being revealed to a person who is not entitled to access the private page URL.

In the password authentication carried out on the web browser, a verification value is found based on the input password and whether this verification value matches a password key or not is determined, instead of determining whether the input password matches the authentication password. Therefore, it is difficult for others to find out the correct password.

Moreover, if the password authentication is successful, the private page URL is found based on the input password and the private page URL key and then the private page information is requested. Therefore, it is difficult to find the private page URL based on the password key and the private page URL key included in the authentication page information. Thus, it can be prevented that a user who does not know the password opens the private page easily.

Furthermore, since the authentication is carried out on the web browser of the user terminal, the authentication can be carried out without causing an unnecessary load on the apparatus side. Also, only the private URL part is made secret, instead of encrypting and making secret the entire authentication page information as in the case where SSL (Secure Socket Layer) is used. Therefore, the private URL can be made secret without causing an unnecessary load on the user terminal.

Example 2

Application to Network Apparatus

While the setting of the network camera is described as an example in Example 1, in this Example 2, an example in which various settings of a network apparatus 800 are carried out from the web browser 161 on the PC 160 via the network 150 will be described.

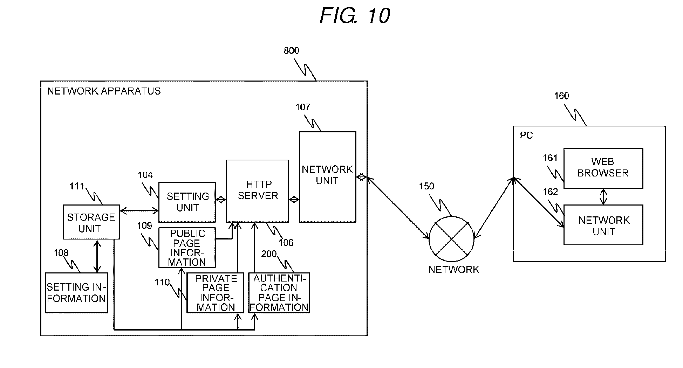

FIG. 10 shows the overall configuration of Example 2.

Of the network apparatus 800 of FIG. 10, portions having the same functions as the configuration parts which are already described and denoted by the same reference numerals shown in FIG. 1 will not be described further in detail.

In FIG. 10, the network apparatus 800 includes a setting unit 104, an HTTP server 106, a network unit 107, a storage unit 111, setting information 108, public page information 109, private page information 110, and authentication page information 200. The network apparatus 800 is connected to the network 150.

The HTTP server 106 sends and receives the setting information 108, the public page information 109, the private page information 110 and the authentication page information 200 of the network apparatus 800 via the network unit 107.

The network unit 107 connects to the network 150 and sends and receives the information of the HTTP server 106.

With the above configuration, the authentication page information 200 transmitted from the network apparatus 800 of Example 2 does not include a password and a private page URL, as in Example 1. Since it is difficult to find the password and the private page URL based on the password key 205 and the private page URL key 206 included in the authentication page information 200, it can be prevented that a user who does not know the password opens the private page easily.

Example 3

In this example, an example in which various settings of the network apparatus 800 are carried out from the web browser 161 on the PC 160 via the network 150 will be described.

The overall configuration is equal to the configuration of FIG. 10.

In this example, a password key PWKEY is generated based on a password PW, using the equation (13), instead of the password key generation processing (S400).

$$PWKEY = BASE64ENC(AES\_E(STR,PW))$$

$$(13)$$

Here, AES_E(P,K) is a function to carry out encryption based on AES (Advanced Encryption Standard) using a plaintext P and a key K. BASE64ENC is a function to carry out BASE64 encoding. STR is a prescribed character string.

In this example, a URL key (URLKEY) is generated based on a connection URL (URL) and a password PW, using the equation (14), instead of the URL key generation processing (S500).

$$URLKEY = BASE64ENC(AES\_E(URL,PW))$$

$$(14)$$

Here, AES_E(P,K) is a function to carry out encryption based on AES using a plaintext P and a key K. BASE64ENC is a function to carry out BASE64 encoding.

In this example, a verification value PWKEY_IN is found based on an input password PW_IN, using the equation (15), and the verification value PWKEY_IN and a password key PWKEY are compared, thus determining whether the verification is successful or not, instead of the password verification processing (S600).

$$PWKEY\_IN = BASE64ENC(AES\_E(STR,PW\_IN))$$

$$(15)$$

Here, AES_E(P,K) is a function to carry out encryption based on AES using a plaintext P and a key K. BASE64ENC is a function to carry out BASE64 encoding. STR is a prescribed character string.

If the verification value PWKEY_IN found by the equation (15) matches the password key PWKEY as a result of the comparison, a success is sent back. If not, a failure is sent back.

In this example, a connection URL (URL) is acquired based on a URL key (URLKEY) and an input password PW_IN, using the equation (16), instead of the URL recovery processing (S700).

$$URL = AES\_D(BASE64DEC(URLKEY),PW\_IN)$$

$$(16)$$

Here, AES_D(C,K) is a function to carry out decryption based on AES using a ciphertext C and a key K. BASE64DEC() is a function to carry out BASE64 decoding.

While AES is used as an encryption algorithm in the above, other encryption algorithms such as DES (Data Encryption Standard) may also be used.

Also, while BBASE64ENC and BASE64DEC are used to transform the password key and the URL key into a text form so that these keys can be included in HTML, other text forming measures such as JSON may also be used.

By using the encryption algorithm as described above, high-speed processing can be carried out using hardware in an apparatus or the like equipped with hardware or the like which processes the encryption algorithm. Also, since the connection of character strings (equation (3)), the calculation of a hash value (equation (4)) and the exclusive OR (equation (5)) in Example 1 are replaced by encryption algorithms, the processing can be simplified.

**Claims**

1. A user authentication system which carries out authentication at a user terminal via a network, comprising an authentication page where permission of authentication is determined based on a consistency between an input password inputted from the user terminal and an authentication password, the authentication page including:

   a private page URL key obtained by transforming a private page URL which the user terminal can connect via the network if it is determined that the authentication is permitted and an authentication password, using an encryption algorithm; and
   a URL recovery processing code to find the private page URL by transforming the private page URL key and the input password through inverse transformation of the encryption algorithm,
   wherein if it is determined that the authentication is permitted, the private page URL is acquired using the URL recovery processing code.

2. The user authentication system according to claim 1, wherein the authentication page information includes a password verification processing code to compare a password key obtained by transforming the authentication password based on a unidirectional function and a verification value obtained by transforming the input password through processing including the unidirectional function, and thus carry out authentication of password consistency.

3. The user authentication system according to claim 2, wherein the password key is calculated by finding a hash value of the authentication password and then transforming the hash value into a character string.

4. The user authentication system according to claim 1, wherein the private page key is calculated by generating a first character string including the password and a prescribed character string added thereto, then finding a hash value of the first character string, finding an exclusive OR of the private page URL and the hash value, and transforming the exclusive OR into a character string.

5. The user authentication system according to claim 1, wherein in the password authentication, a hash value of the input password is found and a value obtained by transforming the hash value into a character string is compared with the password key, and if the value matches the password key, a success is sent back, whereas if the value does not match the password key, a failure is sent back.

6. The user authentication system according to claim 1, wherein in the password authentication, a hash value of the input password is found and the hash value is compared with a value obtained by binarizing the password key, and if the values match, a success is sent back, whereas if the values do not match, a failure is sent back.

7. The user authentication system according to claim 1, wherein in the recovery of the private page URL based on the URL recovery processing code, a first character string including the input password and a prescribed character string added thereto is generated, a hash value of the first character string is found, a binary value of the URL key is found, and an exclusive OR of the hash value and the binary value is found, thereby acquiring a connection URL.

8. A network apparatus which a user accesses via a network, carrying out password authentication at a user terminal, the network apparatus comprising:

   a private page URL key obtained by transforming a private page URL which the user terminal can connect via the network if it is determined that the password authentication is permitted and the authentication password, using an encryption algorithm; and
   a URL recovery processing code to find the private page URL by transforming the private page URL key and the input password through inverse transformation of the encryption algorithm.

9. The network apparatus according to claim 8, wherein the network apparatus outputs the private page URL key and the URL recovery processing code to the user terminal when the password authentication is carried out.

10. A user authentication method comprising the steps of:

   carrying out password authentication in which authentication is carried out based on a consistency between an input password inputted by a user at a user terminal and an authentication password, thus determining whether the authentication is successful or not;
   generating a private page URL key obtained by transforming a private page URL which the user can connected via the network if it is determined that the authentication is permitted, and the authentication password, using an encryption algorithm; and
   generating a URL recovery processing code to find the private page URL by transforming the private page URL key and the input password through inverse transformation of the encryption algorithm.

11. The user authentication system, the network apparatus and the user authentication method according to one of claims 1, 8 and 10,
   wherein the inverse transformation of the encryption algorithm used to generate the private page URL key and the encryption algorithm used to find the private page URL is carried out based on a unidirectional function and an exclusive OR.

## FIG. 1

100

NETWORK CAMERA

101 102 103 105 107

| LENS | → | IMAGE PICKUP UNIT | → | ENCODER | → | RTP SERVER |

NETWORK UNIT

111 104

HTTP SERVER

STORAGE UNIT

SETTING UNIT

109

PUBLIC PAGE INFOR- MATION

200 106

108

110

SETTING INFOR- MATION

PRIVATE PAGE INFOR- MATION

AUTHENTI- CATION PAGE IN- FORMATION

150

NETWORK

160

PC

161

WEB BROWSER

162

NETWORK UNIT

# FIG. 2

200

AUTHENTICATION PAGE INFORMATION

201
PASSWORD INPUT PROC-ESSING CODE

202
PASSWORD VER-IFICATION PROC-ESSING CODE

203
URL RECOVERY PROCESSING CODE

205
PASSWORD KEY

206
PRIVATE PAGE URL KEY

# FIG. 3

```
<html>

<head>
<title>AUTHENTICATION PAGE<RELATED ART></title>
<script type="text/javascript">
<!--
function check_password() {
  var PW = "PASSWORD"          ◄———— PASSWORD(「PASSWORD」)
  var URL = "private.html"     ◄———— PART OF PRIVATE PAGE URL
  var PW_IN;

  PW_IN = prompt("ENTER PASSWORD","");

  if (PW_IN == PW) {
    location.href = URL;
  }else{
    check_password();
  }
}
// -->
</script>
</head>

<body onload=' check_password()'>
THIS IS AUTHENTICATION PAGE.
</body>

</html>
```

## *FIG. 4*

```
<html>

<head>
<title>AUTHENTICATION PAGE<THIS INVENTION></title>
<script type="text/javascript" src="auth.js"></script>
<script type="text/javascript">
<!--
function check_password() {
  var PWKEY = "C+ZK6J3dJ0IIQO3pXVAXETObru4Y8Am6mONpryfTDWA="   ◄──── PASSWORD KEY 205
  var URLKEY = "rlwjcaOmfkD3TVBc"   ◄──── PRIVATE PAGE URL KEY 206
  var PW_IN;

  PW_IN = prompt("ENTER PASSWORD","");

  if ( Auth.check_password(PWKEY, PW_IN) ) {
    location.href = Auth.decode_url(URLKEY, PW_IN);
  }else{
    check_password();
  }
}
// -->
</script>
</head>

<body onload='check_password()'>
THIS IS AUTHENTICATION PAGE.
</body>

</html>
```

# FIG. 5

# FIG. 6

S400

PASSWORD KEY GEN-
ERATION PROCESSING

S401

INPUT AUTHENTICATION PASSWORD (PW)

S402

FIND HASH VALUE (H) BASED ON AUTHENTICATION
PASSWORD (PW) H=SHA256(PW)

S403

FIND PASSWORD KEY (PWKEY) BASED ON HASH
VALUE (H) PWKEY=BASE64ENC(H)

S404

OUTPUT PASSWORD KEY (PWKEY)

END

# FIG. 7

S500

PRIVATE PAGE URL KEY
GENERATION PROCESSING

S501

NPUT AUTHENTICATION PASSWORD (PW),
PRIVATE PAGE URL (URL)

S502

GENERATE CHARACTER STRING (X) INCLUDING AU-
THENTICATION PASSWORD (PW) AND PRESCRIBED
CHARACTER STRING ADDED THERETO X=DMY|PW

S503

FIND HASH VALUE (H) OF CHARACTER STRING (X)
H=SHA256(X)

S504

FIND EXCLUSIVE OR (Y) OF PRIVATE PAGE
URL (URL) AND HASH VALUE (H) Y=H xor URL

S505

FIND PRIVATE PAGE URL KEY (URLKEY) BASED
ON EXCLUSIVE OR (Y) URLKEY=BASE64ENC(Y)

S506

OUTPUT PRIVATE PAGE URL KEY (URLKEY)

END

*FIG. 8*

S600

( PASSWORD VERIFICA-
TION PROCESSING )

S601

ENTER INPUT PASSWORD (PW_IN)
AND PASSWORD KEY (PWKEY)

S602

FIND HASH VALUE (H_IN) BASED ON INPUT
PASSWORD (PW_IN) H_IN=SHA256(PW_IN)

S603

FIND VERIFICATION VALUE (PWKEY_IN) BASED ON
HASH VALUE (H_IN) PWKEY_IN=BASE64ENC(H_IN)

S604

VERIFICATION
VALUE (PWKEY_IN) MATCHES PASSWORD KEY
(PWKEY)?

N

Y

S605

OUTPUT SUCCESS

S606

OUTPUT FAILURE

( END )

# FIG. 9

URL RECOVERY
PROCESSING — S700

ENTER INPUT PASSWORD (PW_IN)
AND URL KEY (URLKEY) — S701

GENERATE CHARACTER STRING (X_IN) INCLUDING
INPUT PASSWORD (PW_IN) AND PRESCRIBED
CHARACTER STRING ADDED THERETO
X_IN=DMY|PW_IN — S702

FIND HASH VALUE (H_IN) OF CHARACTER STRING X_IN
H_IN=SHA256(X_IN) — S703

FIND BINARY VALUE Z OF URL KEY (URLKEY)
Z=BASE64DEC(URLKEY) — S704

FIND EXCLUSIVE OR OF BINARY VALUE (Z) AND
HASH VALUE (H_IN) URL=H_INxorZ — S705

OUTPUT CONNECTION URL (URL) — S706

END

*FIG. 10*

**EP 2 690 575 A2**

**REFERENCES CITED IN THE DESCRIPTION**

**Patent documents cited in the description**

- JP 2001060185 A